# EUROPEAN PATENT APPLICATION

(11) **EP 4 723 040 A1**
(43) Date of publication of application: **08.04.2026**
(21) Application number: 24830770.4
(22) Date of filing: 25.06.2024
(51) Int. Cl.: G06T 11/60

(54) **IMAGE EDITING METHOD AND RELATED DEVICE**

(30) Priority: 30.06.2023 CN 202310800971
(71) Applicant: Huawei Technologies Co., Ltd., Shenzhen, Guangdong 518129 (CN)
(72) Inventor: PEI, Renjing, Shenzhen, Guangdong 518129 (CN); SHAO, Bin, Shenzhen, Guangdong 518129 (CN); LI, Weimian, Shenzhen, Guangdong 518129 (CN); LIU, Jianzhuang, Shenzhen, Guangdong 518129 (CN)
(74) Representative: Epping - Hermann - Fischer
(86) International application number: PCT/CN2024/101395
(87) International publication number: WO 2025/002130

(57) **Abstract**

Embodiments of this application provide an image editing method and a related device, and relate to the AI field. In the method, a first image and a first text are obtained, where the first text represents an editing requirement of the first image. The editing requirement is decoupled into at least two first basic editing tasks based on the first text, where each first basic editing task is used to implement an image processing phase in a process of editing the first image to meet the editing requirement. A first edited image is generated based on the first image, the first text, and the at least two first basic editing tasks. In this solution, the editing requirement is decoupled to obtain a plurality of basic editing tasks, and the plurality of basic editing tasks may be executed by one image editing model. This enables one image editing model to meet a plurality of image editing requirements without deploying different subtask models for different editing tasks, thereby enhancing image editing efficiency.

## Description

This application claims priority to Chinese Patent Application No. 202310800971.3, filed with the China National Intellectual Property Administration on June 30, 2023 and entitled "IMAGE EDITING METHOD AND RELATED DEVICE", which is incorporated herein by reference in its entirety.

### TECHNICAL FIELD

Embodiments of this application relate to the image field, and in particular, to an image editing method and a related device.

### BACKGROUND

An image is a description or reflection of similarity and vividness of an objective object, and is a most commonly used information carrier in human social activities. In other words, the image is a representation of the objective object, and includes related information of the described object. The image is a main information source for people.

With development of artificial intelligence (Artificial Intelligence, AI) technologies, an AI model may be used to edit an image based on different editing requirements, to generate images that meet the editing requirements. The AI model is, for example, a ControlNet model. However, for the ControlNet model, as there are more image editing tasks, more subtask models need to be defined and deployed. For example, a subtask model needs to be deployed for a clothes change task, and another subtask model needs to be deployed for a task of moving an object. In this case, when there is a new editing task requirement, a new subtask model needs to be deployed to execute a new editing task. Model deployment takes time, and an image editing efficiency requirement cannot be met.

### SUMMARY

This application provides an image editing method and a related device, to enhance image editing efficiency.

According to a first aspect, an image editing method is provided. The method may be performed by an image editing apparatus, or may be performed by a chip in an image editing apparatus.

The image editing method includes the following steps: obtaining a first image and a first text, where the first text represents an editing requirement of the first image; decoupling the editing requirement into at least two first basic editing tasks based on the first text, where each first basic editing task is used to implement an image processing phase in a process of editing the first image to meet the editing requirement; and generating a first edited image based on the first image, the first text, and the at least two first basic editing tasks.

The first image may be one image, and correspondingly, the first edited image is one edited image. The first image may alternatively be a plurality of images, and correspondingly, the first edited image is a plurality of edited images. For example, when the first image is a plurality of images, it may be understood that this solution may be applied to video editing, and a video includes a plurality of images that are consecutive in time.

The image processing phase may be a processing phase of a complete function, for example, any one of functions such as a generation function, a fusion function, a pickup function, a removal function, a portrait beautification function, and a portrait shaping function, or any combination of the foregoing functions. The image processing phase may alternatively be a processing phase for implementing a part of function, for example, a generation function 1, a generation function 2, a fusion function 1, a fusion function 2, or a fusion function 3. Two image processing phases corresponding to the generation function 1 and the generation function 2 may be combined to implement a complete generation function. Similarly, three image processing phases corresponding to the fusion function 1, the fusion function 2, and the fusion function 3 may be combined to implement a complete fusion function.

In this solution, when the first image is edited, the editing requirement of the first image is decoupled into the at least two first basic editing tasks based on the first text, and then the first edited image is generated based on the at least two first basic editing tasks, the first image, and the first text. Therefore, in this solution, the editing requirement is decoupled to obtain a plurality of basic editing tasks, and the plurality of basic editing tasks may be executed by one image editing model. This enables one image editing model to meet a plurality of image editing requirements without deploying different subtask models for different editing tasks, thereby enhancing image editing efficiency.

In a possible implementation of the first aspect, generating the first edited image based on the first image, the first text, and the at least one first basic editing task specifically includes the following steps: generating a first noise based on the first text; generating at least one second noise based on the first image and the at least two first basic editing tasks; inputting the first noise and the at least one second noise into a noise decision network for processing, to obtain a third noise; and generating the first edited image based on the third noise.

It can be learned that, in this solution, the third noise that matches the first text is obtained from the first noise and the at least one second noise through the noise decision network, and then the first edited image is generated based on the third noise, so that a matching degree between the first edited image and the first text, namely, editing accuracy, can be improved.

In a possible implementation of the first aspect, the image editing method further includes the following step: determining a first score of the first edited image based on the first edited image, the first image, and the first text, where the first score represents editing quality of the first edited image.

It can be learned that, in this solution, the first score that reflects image editing quality is determined by using the first image, the first text, and the first edited image, so that a user can learn of editing effect of the first edited image based on the first score.

In a possible implementation of the first aspect, the image editing method further includes the following step: decoupling the editing requirement into at least two second basic editing tasks based on the first text and the first score, where each second basic editing task is used to implement an image processing phase in the process of editing the first image to meet the editing requirement; and generating a second edited image based on the first image, the first text, and the at least two second basic editing tasks, where editing quality of the second edited image is higher than the editing quality of the first edited image.

Similar to the first basic editing task, the image processing phase implemented by the second basic editing task may be a processing phase of a complete function, or the image processing phase implemented by the second basic editing task may be a processing phase of implementing a part of function.

The first image may be one image, and correspondingly, the second edited image is one edited image. The first image may alternatively be a plurality of images, and correspondingly, the second edited image is a plurality of edited images.

In this solution, after the first score of the first edited image is obtained, the editing requirement of the first image may be re-decoupled based on the first score and the first text, to obtain the at least two second basic editing tasks. Then, the second edited image is generated based on the first image, the first text, and the at least two second basic editing tasks. The first score is used as a factor affecting generation of an edited image, to generate the second edited image with higher editing quality.

In a possible implementation of the first aspect, the first basic editing task or the second basic editing task includes at least one of the following: generation, fusion, pickup, removal, portrait beautification, and portrait shaping.

According to a second aspect, this application further provides an image editing apparatus, including an obtaining module, a decoupling module, and a generation module.

The obtaining module is configured to obtain a first image and a first text, where the first text represents an editing requirement of the first image.

The decoupling module is configured to decouple the editing requirement into at least two first basic editing tasks based on first text, where each first basic editing task is used to implement an image processing phase in a process of editing the first image to meet the editing requirement.

The generation module is configured to generate a first edited image based on the first image, the first text, and the at least two first basic editing tasks.

When editing the first image, the image editing apparatus in this solution decouples the editing requirement of the first image into the at least two first basic editing tasks based on the first text, and then generates the first edited image based on the at least two first basic editing tasks, the first image, and the first text. Therefore, the image editing apparatus in this solution splits the editing requirement to obtain a plurality of basic editing tasks, and the plurality of basic editing tasks may be executed by one image editing model. This enables one image editing model to meet a plurality of image editing requirements without deploying different subtask models for different editing tasks, thereby enhancing image editing efficiency.

In a possible implementation of the second aspect, the generation module is specifically configured to: generate a first noise based on the first text; generate at least one second noise based on the first image and the at least two first basic editing tasks; input the first noise and the at least one second noise into a noise decision network for processing, to obtain a third noise; and generate the first edited image based on the third noise.

In a possible implementation of the second aspect, the image editing apparatus further includes a determining module.

The determining module is configured to determine a first score of the first edited image based on the first edited image, the first image, and the first text, where the first score represents editing quality of the first edited image.

In a possible implementation of the second aspect, the decoupling module is further configured to decouple the editing requirement into at least two second basic editing tasks based on the first text and the first score, where each second basic editing task is used to implement an image processing phase in the process of editing the first image to meet the editing requirement.

The generation module is further configured to generate a second edited image based on the first image, the first text, and the at least two second basic editing tasks, where editing quality of the second edited image is higher than the editing quality of the first edited image.

In a possible implementation of the second aspect, the first basic editing task or the second basic editing task includes at least one of the following: generation, fusion, pickup, removal, portrait beautification, and portrait shaping.

According to a third aspect, this application further provides an image editing device, including a processor and a memory. The processor is connected to the memory, the memory is configured to store program code, and the processor is configured to invoke the program code to perform the image editing method according to the first aspect.

According to a fourth aspect, this application further provides a computer-readable storage medium. The computer-readable storage medium stores a computer program, and the computer program is executed by a processor to implement the image editing method according to the first aspect.

According to a fifth aspect, this application further provides a computer program product including instructions. When the computer program product runs on a computer, the computer is enabled to perform the image editing method according to the first aspect.

According to a sixth aspect, this application further provides a chip. The chip includes a processor and a data interface, and the processor reads, through the data interface, instructions stored in a memory, to perform the image editing method according to the first aspect.

Optionally, in an implementation, the chip may further include a memory. The memory stores instructions. The processor is configured to execute the instructions stored in the memory, and when the instructions are executed, the processor is configured to perform the image editing method according to the first aspect.

### BRIEF DESCRIPTION OF DRAWINGS

The following describes accompanying drawings used in embodiments of this application.
FIG. 1A is a diagram of an image editing method according to an embodiment of this application;
FIG. 1B is a diagram of another image editing method according to an embodiment of this application;
FIG. 1C is a diagram of another image editing method according to an embodiment of this application;
FIG. 1D is a diagram of another image editing method according to an embodiment of this application;
FIG. 2 is a diagram of a system architecture according to an embodiment of this application;
FIG. 3 is a schematic flowchart of an image editing method according to an embodiment of this application;
FIG. 4 is a diagram of a structure of an image editing model according to an embodiment of this application;
FIG. 5 is a diagram of a structure of an editing model according to an embodiment of this application;
FIG. 6 is a diagram of a structure of an image editing apparatus according to an embodiment of this application; and
FIG. 7 is a diagram of a structure of an image editing device according to an embodiment of this application.

### DESCRIPTION OF EMBODIMENTS

The following describes the technical solutions of this application with reference to accompanying drawings.

Embodiments of this application relate to an application. Therefore, for ease of understanding, the following first describes related concepts such as related terms in embodiments of this application. In embodiments of this application, words such as "example" or "for example" are used to give an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. Sequence numbers of steps (for example, step S1 and step S21) in embodiments of this application are merely used to distinguish between different steps, and do not limit an execution sequence of the steps.

In addition, unless otherwise stated, ordinal numbers such as "first" and "second" used in embodiments of this application are used to distinguish between a plurality of objects, and are not intended to limit a sequence, a time sequence, priorities, or importance degrees of the plurality of objects. For example, a first device and a second device are merely for ease of description, and do not indicate a difference of the first device and the second device in terms of a structure and an importance degree. In some embodiments, the first device and the second device may alternatively be the same device.

Based on the context, the term "when" used in the foregoing embodiments may be interpreted as "if", "after", "in response to determining", or "in response to detecting". The foregoing descriptions are merely optional embodiments of this application, but are not intended to limit this application. Any modification, equivalent replacement, improvement, or the like made within the concept and principle of this application shall fall within the protection scope of this application.

Artificial intelligence is a theory, a method, a technology, and an application system that simulate, extend, and expand human intelligence by using a digital computer or a machine controlled by a digital computer, to perceive an environment, obtain knowledge, and use the knowledge to obtain an optimal result. In other words, the artificial intelligence is a branch of computer science, and is intended to understand essence of intelligence and produce a new intelligent machine that can react in a manner similar to the human intelligence. The artificial intelligence is to study design principles and implementation methods of various intelligent machines, to enable the machines to have perception, inference, and decision-making functions. Research in the field of artificial intelligence includes robotics, natural language processing, computer vision, decision-making and inference, human-machine interaction, recommendation and search, AI basic theories, and the like. An AI model may be used to edit an image based on different editing requirements, to generate images that meet the editing requirements. The AI model is, for example, a ControlNet model. However, for the ControlNet model, as there are more image editing tasks, more subtask models need to be defined and deployed. For example, a subtask model needs to be deployed for a clothes change task, and another subtask model needs to be deployed for a task of moving an object. In this case, when there is a new editing task requirement, a new subtask model needs to be deployed to execute a new editing task. Model deployment takes time, and an image editing efficiency requirement cannot be met.

Therefore, embodiments of this application provide an image editing method. An editing requirement of an image is decoupled to obtain a plurality of basic editing tasks, and the plurality of basic editing tasks may be executed by one image editing model. This enables one image editing model to meet a plurality of image editing requirements without deploying different subtask models for different editing tasks, thereby enhancing image editing efficiency. For example, when the editing requirement is to change clothes, two basic editing tasks: pickup and generation, may be used for implementation. When the editing requirement is to move a target object, three basic editing tasks: pickup, removal, and fusion, may be used for implementation. When the editing requirement is to change a background, three basic editing tasks: pickup, generation, and fusion, may be used for implementation.

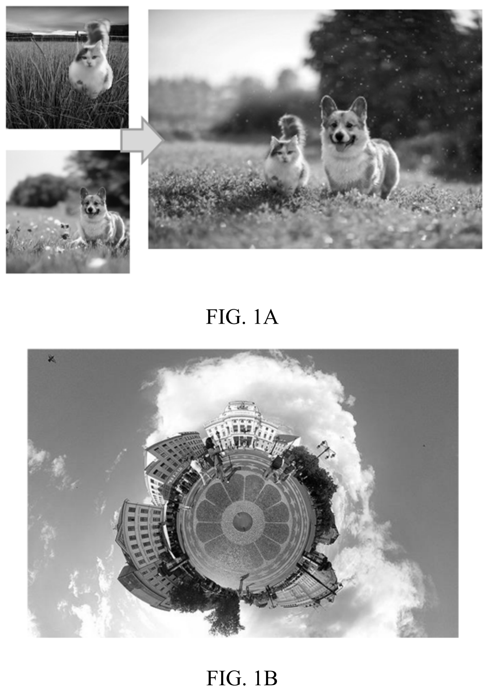

Refer to FIG. 1A. When the editing requirement is to combine objects in a photo, according to the image editing method in embodiments of this application, a kitten and a puppy in two images on the left of FIG. 1A may be combined, to obtain an image on the right of FIG. 1A.

When the editing requirement is to fuse a plurality of photos at different angles into one image for displaying a 360-degree panorama, a fused image obtained according to the image editing method in embodiments of this application is shown in FIG. 1B.

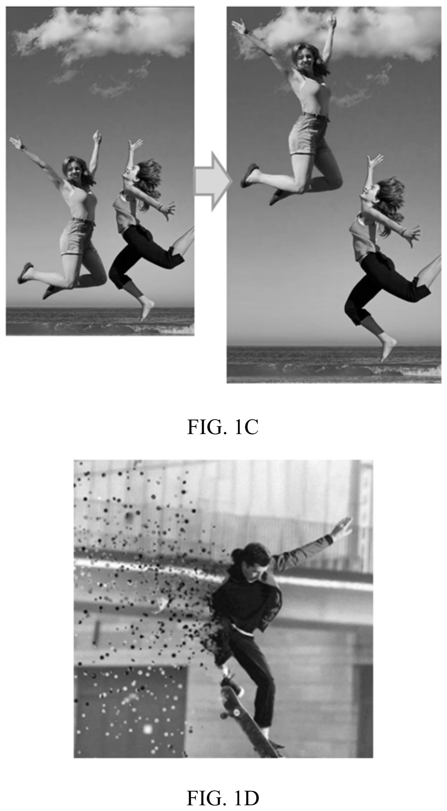

When the editing requirement is to make a person in an image jump higher, according to the image editing method in embodiments of this application, a position of a girl whose position is on the left in an image on the left of FIG. 1C may be raised, to obtain an image on the right of FIG. 1C.

When an editing requirement is to process an image into an image with fragment effect, according to the image editing method in embodiments of this application, the image with fragment effect may be obtained, as shown in FIG. 1D.

The image editing method in embodiments of this application may be performed by an image editing apparatus, or may be performed by a chip in an image editing apparatus.

The following describes a system architecture according to an embodiment of this application.

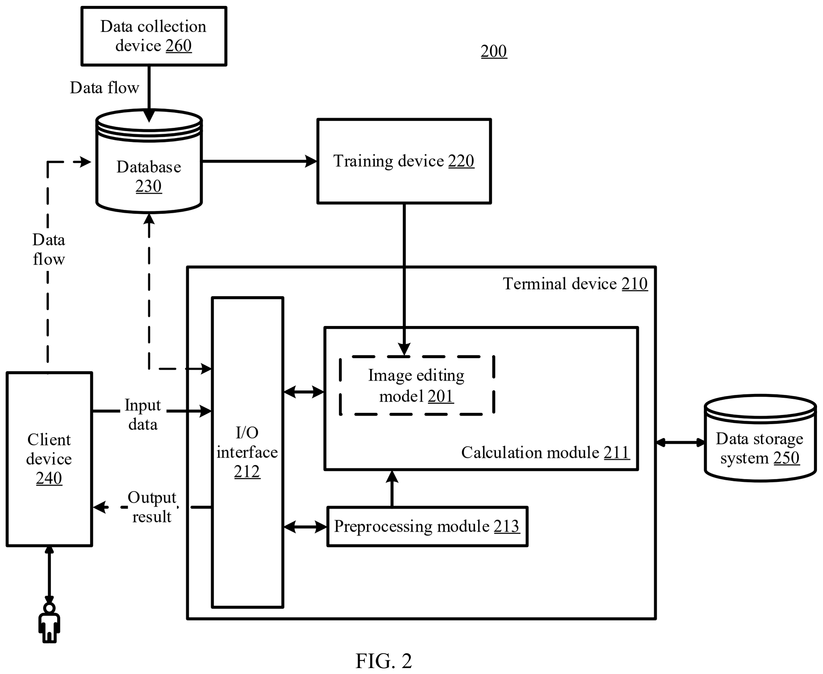

As shown in FIG. 2, an embodiment of this application provides a system architecture 200. As shown in the system architecture 200, a data collection device 260 is configured to collect processing data of an image editing model. In this embodiment, the processing data is a to-be-edited image. The data collection device 260 stores the processing data in a database 230. A training device 220 may train the initial image editing model based on the processing data maintained in the database 230, to obtain an image editing model 201. For example, in this embodiment of this application, after model training is completed, the image editing model 201 may obtain processing capabilities of various basic editing tasks (for example, a first basic editing task and a second basic editing task in the following) and a capability of generating an edited image. The training device 220 may be a server, a cloud service device, or the like, or may be a device like a mobile phone terminal, a tablet computer, a notebook computer, AR/VR, a vehicle-mounted terminal, a monitoring device, a vehicle-mounted autonomous driving system, or an unmanned vending machine. It should be noted that, during actual application, the processing data maintained in the database 230 is not necessarily all collected by the data collection device 260, and may be received from another device, for example, a camera. In addition, it should be noted that the training device 220 may not necessarily perform model training completely based on the processing data maintained in the database 230, or may obtain processing data from a cloud or another place to perform model training. The foregoing descriptions should not be construed as a limitation on embodiments of this application.

The image editing model 201 obtained through processing by the training device 220 may be applied to a system or a device that has a same hardware configuration as the training device 220, for example, applied to a terminal device 210 shown in FIG. 2. The terminal device 210 may edit an image based on the image editing model 201 to obtain an edited image. The terminal device 210 may be a terminal like a mobile phone terminal, a tablet computer, a notebook computer, AR/VR, a vehicle-mounted terminal, a monitoring device, a vehicle-mounted autonomous driving system, or an unmanned vending machine, or may be a server, a cloud, or the like. The training device 220 and the terminal device 210 may be a same device.

In FIG. 2, the terminal device 210 is configured with an I/O interface 212, configured to exchange data with an external device. A user may input data to the I/O interface 212 through a client device 240. In this embodiment, the input data is a to-be-edited image, and may be input by the user, or may be from the database 230. The client device 240 may be a picture obtaining device, for example, a camera.

A preprocessing module 213 is configured to perform preprocessing based on the input data received by the I/O interface 212. In this embodiment of this application, the preprocessing module 213 is configured to perform preprocessing based on the input data received by the I/O interface 212, and preprocessed data enters a calculation module 211. In this embodiment of this application, the preprocessing module 213 may be configured to perform at least one of filtering, enhancement, denoising, and the like on the to-be-edited image, to obtain a to-be-edited image that meets a requirement.

In a related processing process in which the terminal device 210 preprocesses the input data or the calculation module 211 of the terminal device 210 performs calculation, the terminal device 210 may invoke data, code, and the like in a data storage system 250 to perform corresponding processing, and may also store, into the data storage system 250, data, instructions, and the like obtained through corresponding processing.

Finally, the I/O interface 212 returns a model processing result of the input data, namely, an edited image, to the client device 240, to provide the edited image for the user. In this case, the client device 240 may be a display.

In the case shown in FIG. 2, the user may manually give the input data, and the manual giving may be performed on an interface provided by the I/O interface 212. In another case, the client device 240 may automatically send the input data to the I/O interface 212. If it is required that the client device 240 needs to obtain a grant from the user for automatically sending the input data, the user may set corresponding permission in the client device 240. The user may view, on the client device 240, a result output by the terminal device 210. Specifically, the result may be presented in a form of display, a sound, an action, or the like. The client device 240 may also serve as a data collection end; collect, as new sample data, the input data that is input to the I/O interface 212 and an output result that is output from the I/O interface 212 shown in FIG. 2; and store the new sample data in the database 230. Certainly, the client device 240 may alternatively not perform collection, but the I/O interface 212 directly stores, as new sample data into the database 230, the input data that is input into the I/O interface 212 and the output result that is output from the I/O interface 212 that are shown in FIG. 2.

It should be noted that FIG. 2 is merely a diagram of a system architecture according to an embodiment of this application. A position relationship between a device, a component, a module, and the like shown in the figure constitutes no limitation. For example, in FIG. 2, the data storage system 250 is an external memory relative to the terminal device 210. In another case, the data storage system 250 may alternatively be disposed in the terminal device 210.

The following specifically describes the image editing method in embodiments of this application. An example in which the method is performed by an image editing apparatus is used.

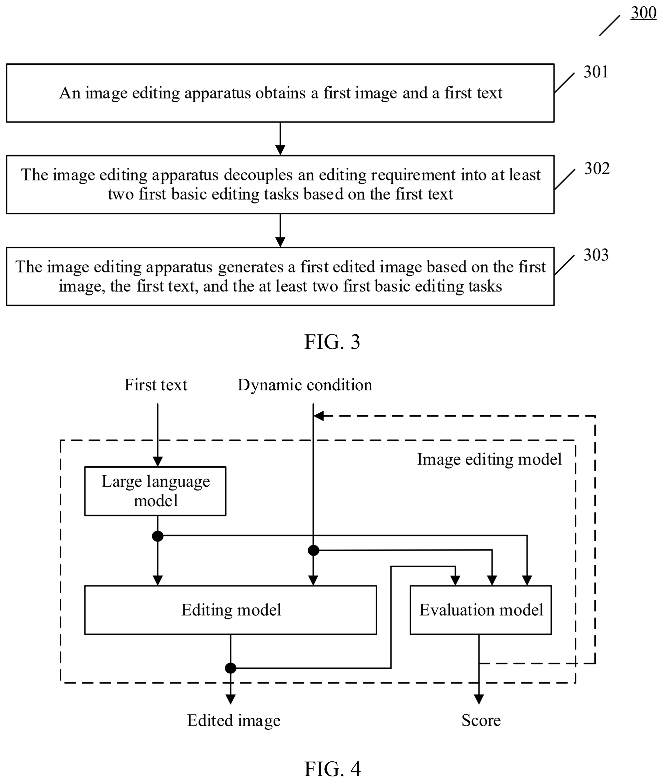

FIG. 3 is a schematic flowchart of the image editing method according to an embodiment of this application. The image editing method 300 includes the following steps.

301: The image editing apparatus obtains a first image and a first text.

The first image may be one image, and correspondingly, a first edited image is one edited image. The first image may alternatively be a plurality of images, and correspondingly, a first edited image is a plurality of edited images. For example, when the first image is a plurality of images, it may be understood that this solution may be applied to video editing, and a video includes a plurality of images that are consecutive in time. The first text represents an editing requirement of the first image. Generally, the first text includes words expressed in a natural language.

For example, the first image may be obtained from data locally stored in the image editing apparatus, or may be obtained by the image editing apparatus from a camera in real time. The first text may be input by a user into the image editing apparatus through an input apparatus (a keyboard, a voice input, or the like). For example, if the first text is "Change clothes of the person in the image", a corresponding editing requirement is to change clothes.

302: The image editing apparatus decouples the editing requirement into at least two first basic editing tasks based on the first text.

Each first basic editing task is used to implement an image processing phase in a process of editing the first image to meet the editing requirement. The image processing phase may be a processing phase of a complete function, for example, a generation function, a fusion function, a pickup function, a removal function, a portrait beautification function, or a portrait shaping function. The removal function refers to removing a selected image area from an image. The image processing phase may alternatively be a processing phase for implementing a part of function, for example, a generation function 1, a generation function 2, a fusion function 1, a fusion function 2, or a fusion function 3. Two image processing phases corresponding to the generation function 1 and the generation function 2 may be combined to implement a complete generation function. Similarly, three image processing phases corresponding to the fusion function 1, the fusion function 2, and the fusion function 3 may be combined to implement a complete fusion function.

For example, when the editing requirement is to change clothes, two first basic editing tasks: pickup and generation, may be used for implementation.

303: The image editing apparatus generates the first edited image based on the first image, the first text, and the at least two first basic editing tasks.

In this embodiment of this application, a plurality of basic editing tasks are obtained based on the editing requirement, and the plurality of basic editing tasks may be executed by one image editing model. This enables one image editing model to meet a plurality of image editing requirements without deploying different subtask models for different editing tasks, thereby enhancing image editing efficiency. In this way, when there is a new editing requirement, a new editing result can be obtained by changing only the input first text and the input first image.

When the image editing apparatus decouples the editing requirement into one first basic editing task based on the first text, the editing requirement of the image is specific to the first basic editing task, to help quickly complete editing processing on the image.

The first basic editing task includes at least one of the following: generation, fusion, pickup, removal, portrait beautification, and portrait shaping. The first basic editing task may be any one or a combination of the foregoing items, or the first basic editing task may be another possible task. This is not limited.

In a possible implementation, step 303 specifically includes the following steps.

331: The image editing apparatus generates a first noise based on the first text.

In this embodiment of this application, a noise may be understood as a hidden variable. The first noise is generated based on the first text, and the first noise matches the first text. A specific method for generating the first noise based on the text may be a conventional technology. This is not limited. For example, a stable diffusion (Stable Diffusion) model or an encoding part in a diffusion (Diffusion) model is used for implementation.

A corresponding text vector (or semantic vector) is first generated based on the first text, and then the first noise is generated based on the text vector. In addition, an image may be restored (or generated) based on the first noise.

332: The image editing apparatus generates at least one second noise based on the first image and the at least two first basic editing tasks.

Specifically, because the at least two first basic editing tasks are obtained through decoupling based on the first text, after the first image is processed based on the at least two first basic editing tasks to obtain processing results of the first basic editing tasks, the processing results are fused to obtain the at least one second noise. In addition, at least one image may be respectively restored (or generated) based on the at least one second noise.

333: The image editing apparatus inputs the first noise and the at least one second noise into a noise decision network for processing, to obtain a third noise.

The third noise that matches the first text is obtained from the first noise and the at least one second noise through the noise decision network.

Optionally, feature extraction may be first performed on the noises (the first noise and the at least one second noise) to obtain feature vectors, and then the feature vectors corresponding to the noises are input into the noise decision network for processing, to obtain the third noise.

334: The image editing apparatus generates the first edited image based on the third noise.

The first edited image is generated based on the third noise that matches the first text, so that a matching degree between the first edited image and the first text, namely, editing accuracy, can be improved.

For example, the noise decision network may first select one second noise from the at least one second noise, and then add the selected second noise and the first noise to obtain the third noise. A method for selecting the second noise may be randomly selecting one second noise, or selecting one second noise according to a specific rule. This is not limited.

For another example, after learning a network parameter through training, the noise decision network may generate a new noise, namely, the third noise, through fusion based on the first noise and the at least one second noise.

In a possible implementation, the image editing method 300 further includes the following step:
the image editing apparatus determines a first score of the first edited image based on the first edited image, the first image, and the first text, where the first score represents editing quality of the first edited image.

Specifically, the editing quality includes at least one of accuracy of natural language understanding, fidelity, a harmony degree, a proper degree of image composition, a distortion degree, and the like. The editing quality may alternatively be another indicator used to evaluate image quality. This is not limited.

The accuracy of natural language understanding means whether the first text is correctly understood, that is, whether the edited image meets the editing requirement corresponding to the first text.

The fidelity indicates whether the edited image is distorted compared with the first image, for example, whether a same object maintains consistency or has no difference in the edited image and the first image.

The harmony degree refers to a degree to which the edited image has a sense of violation.

The distortion degree refers to a degree to which an object, a background, and/or the like in the edited image greatly change.

In this embodiment of this application, the first score that reflects image editing quality is determined by using the first image, the first text, and the first edited image, so that the user can learn of editing effect of the first edited image based on the first score.

In a possible implementation, the image editing method 300 further includes the following steps. 304: The image editing apparatus decouples the editing requirement into at least two second basic editing tasks based on the first text and the first score.

For example, the user determines, based on a specific situation of the first score, whether to perform step 304. Alternatively, when the first score is less than a score threshold, step 304 is performed. A specific value of the score threshold may be set based on an actual situation.

Each second basic editing task is used to implement an image processing phase in the process of editing the first image to meet the editing requirement. Similar to the first basic editing task, the image processing phase implemented by the second basic editing task may be a processing phase of a complete function, or the image processing phase implemented by the second basic editing task may be a processing phase of implementing a part of function.

305: The image editing apparatus generates a second edited image based on the first image, the first text, and the at least two second basic editing tasks, where editing quality of the second edited image is higher than the editing quality of the first edited image.

The first image may be one image, and correspondingly, the second edited image is one edited image. The first image may alternatively be a plurality of images, and correspondingly, the second edited image is a plurality of edited images.

For example, that the editing quality of the second edited image is higher than the editing quality of the first edited image may be that a score of the second edited image is higher than the first score. Alternatively, performance of the second edited image in a quality dimension may be better than performance of the first edited image in the quality dimension. For example, fidelity of the second edited image is higher than the fidelity of the first edited image, or a distortion degree of the second edited image is lower than the distortion degree of the first edited image.

In this embodiment of this application, after the first score of the first edited image is obtained, the editing requirement of the first image may be re-decoupled based on the first score and the first text, to obtain the at least two second basic editing tasks. Then, the second edited image is generated based on the first image, the first text, and the at least two second basic editing tasks. The first score is used as a factor affecting generation of an edited image, to generate the second edited image with higher editing quality.

For example, the user may change the first score and then input the score into the image editing model, to generate an edited image with higher editing quality.

When the image editing apparatus decouples the editing requirement into one second basic editing task based on the first score and the first text, the editing requirement of the image is specific to the second basic editing task, to help quickly complete editing processing on the image.

The second basic editing task includes at least one of the following: generation, fusion, pickup, removal, portrait beautification, and portrait shaping. The second basic editing task may be any one or a combination of the foregoing items, or the second basic editing task may be another possible task. This is not limited.

The following describes a structure of a possible image editing model.

FIG. 4 is a diagram of a structure of an image editing model according to an embodiment of this application. In this embodiment, input content of the image editing model includes a first text and a dynamic condition, and the dynamic condition includes a first image. Further, optionally, the dynamic condition further includes a score (for example, the first score above) of an edited image. Output content of the image editing model includes the edited image. Optionally, the output content of the image editing model further includes the score corresponding to the edited image.

The image editing model includes a large language model, an editing model, and an evaluation model. The large language model (Large Language Model, LLM) is used to generate a corresponding text vector based on the first text. Specifically, the large language model is a model based on machine learning and natural language processing technologies. The large language model is trained by using a large amount of text data, to learn a capability of serving human language understanding and generation. The large language model can process a plurality of natural language tasks, such as text classification, question and answer, and dialogs, and is an important way to artificial intelligence.

The editing model is used to generate the edited image based on the text vector and the dynamic condition. The edited image obtained by the editing model is used as one of inputs of the evaluation model. In this way, the evaluation model may obtain, based on the text vector, the dynamic condition, and the edited image, an evaluation score corresponding to the edited image. The evaluation score may be output to a user, so that the user knows editing quality of the edited image. Optionally, the evaluation score may also be input into the image editing model as one of dynamic conditions, so that the image editing model supports input of a plurality of complex conditions, and controllability of the dynamic conditions is improved.

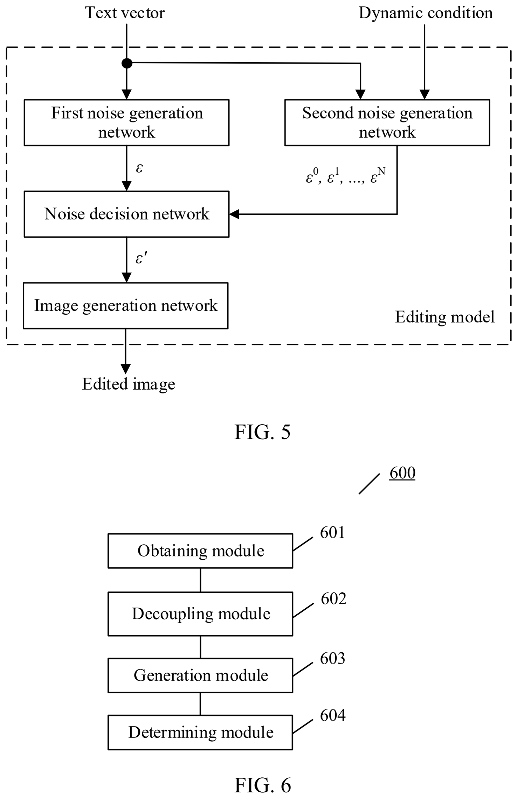

FIG. 5 is a diagram of a structure of an editing model according to an embodiment of this application. The editing model includes a first noise generation network, a second noise generation network, a noise decision network, and an image generation network. The first noise generation network is configured to generate a first noise ε based on a text vector of a first text. The second noise network performs decoupling based on the text vector to obtain at least two basic editing tasks, generates, based on the at least two basic editing tasks and the text vector, processing results corresponding to the basic editing tasks, and then fuses the processing results of the at least two basic editing tasks to obtain at least one second noise. In this embodiment, the second noise generation network generates N second noises, which are respectively ε⁰, ε¹, ..., and ε^{N}. A specific value of N may be set based on an actual situation, and is not limited. For example, N is a quantity of dynamic conditions. When the dynamic condition is one first image, N is 1. When the dynamic condition is two first images, N is 2. When the dynamic condition is two first images and one score, N is 3.

The noise decision network is configured to obtain an optimal third noise ε' based on at least one second noise generated by a super control network and the first noise. The image generation network is configured to generate a valid edited image based on the third noise ε'.

For example, the first noise generation network and the image generation network may be two parts of an image generation model. To be specific, the first noise generation network is an encoding part of the image generation model, and the image generation network is a decoding part of the image generation model. For example, the image generation model is a stable diffusion model or a diffusion model.

For another example, the second noise generation network supports a variable input. The second noise generation network may be implemented by a super control network SuperNet, and the super control network may include a plurality of subnetworks and a fusion network. For example, each subnetwork is used to implement one basic editing task (for example, a first basic editing task or a second basic editing task) of an image, and the fusion network is used to obtain the second noise through fusion based on a processing result of the subnetwork. Alternatively, the second noise generation network controls network learning under a plurality of different conditions based on a learnable prompts (Learnable Prompts) paradigm, so that the second noise generation network has a capability of processing a plurality of basic editing tasks and a capability of generating the second noise.

The sequence numbers of the foregoing steps are merely used to distinguish between different steps, and do not limit an execution sequence of the steps.

The method in embodiments of this application is described above in detail, and apparatuses provided in embodiments of this application are described below.

FIG. 6 is a diagram of a structure of a possible image editing apparatus according to an embodiment of this application. The image editing apparatus may be configured to implement functions in the foregoing method embodiments, and therefore can also implement beneficial effect of the foregoing method embodiments. In this embodiment of this application, the image editing apparatus may be an electronic device, or may be a module (for example, a chip) used in an electronic device.

As shown in FIG. 6, an image editing apparatus 600 includes an obtaining module 601, a decoupling module 602, and a generation module 603. The image editing apparatus 600 is configured to implement functions in the method embodiment shown in FIG. 3. Alternatively, the image editing apparatus 600 may include a module configured to implement any function or operation in the method embodiment shown in FIG. 3. The module may be all or partially implemented by software, hardware, firmware, or any combination thereof.

When the image editing apparatus 600 is configured to implement the functions in the method embodiment shown in FIG. 3, the obtaining module 601 is configured to obtain a first image and a first text, where the first text represents an editing requirement of the first image. The decoupling module 602 is configured to decouple the editing requirement into at least two first basic editing tasks based on first text, where each first basic editing task is used to implement an image processing phase in a process of editing the first image to meet the editing requirement. The generation module 603 is configured to generate a first edited image based on the first image, the first text, and the at least two first basic editing tasks.

When editing the first image, the image editing apparatus 600 in this embodiment of this application decouples the editing requirement of the first image into the at least two first basic editing tasks based on the first text, and then generates the first edited image based on the at least two first basic editing tasks, the first image, and the first text. Therefore, the image editing apparatus in this solution obtains a plurality of basic editing tasks based on the editing requirement, and the plurality of basic editing tasks may be executed by one image editing model. This enables one image editing model to meet a plurality of image editing requirements without deploying different subtask models for different editing tasks, thereby enhancing image editing efficiency.

In a possible implementation, the generation module 603 is specifically configured to: generate a first noise based on the first text; generate at least one second noise based on the first image and the at least two first basic editing tasks; input the first noise and the at least one second noise into a noise decision network for processing, to obtain a third noise; and generate the first edited image based on the third noise.

In a possible implementation, the image editing apparatus 600 further includes a determining module 604.

The determining module 604 is configured to determine a first score of the first edited image based on the first edited image, the first image, and the first text, where the first score represents editing quality of the first edited image.

In a possible implementation, the decoupling module 602 is further configured to decouple the editing requirement into at least two second basic editing tasks based on the first text and the first score, where each second basic editing task is used to implement an image processing phase in the process of editing the first image to meet the editing requirement.

The generation module 603 is further configured to generate a second edited image based on the first image, the first text, and the at least two second basic editing tasks, where editing quality of the second edited image is higher than the editing quality of the first edited image.

In a possible implementation, the first basic editing task or the second basic editing task includes at least one of the following: generation, fusion, pickup, removal, portrait beautification, and portrait shaping.

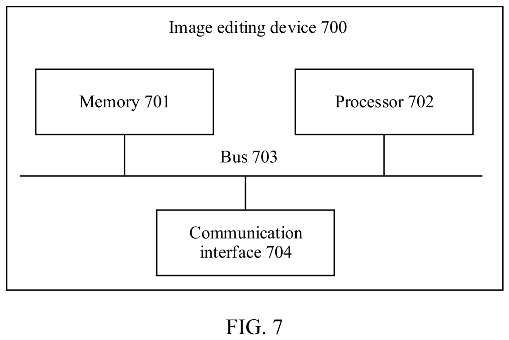

This application further provides an image editing device. FIG. 7 is a diagram of a structure of an image editing device according to an embodiment of this application. The image editing device 700 includes a memory 701, a processor 702, a communication interface 704, and a bus 703. The memory 701, the processor 702, and the communication interface 704 implement communication connections with each other through the bus 703.

The memory 701 may be a read-only memory (Read-Only Memory, ROM), a static storage device, a dynamic storage device, or a random access memory (Random Access Memory, RAM). The memory 701 may store a program. When the program stored in the memory 701 is executed by the processor 702, the processor 702 and the communication interface 704 are configured to perform the steps of the image editing method in embodiments of this application.

The processor 702 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the image editing apparatus in embodiments of this application, or perform the image editing method in embodiments of this application.

Alternatively, the processor 702 may be an integrated circuit chip, and has a signal processing capability. In an implementation process, steps of the image editing method in embodiments of this application can be implemented by using a hardware integrated logic circuit or instructions in a form of software in the processor 702. The processor 702 may alternatively be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The methods, steps, and logical block diagrams that are disclosed in embodiments of this application may be implemented or performed. The general-purpose processor may be a microprocessor, or the processor may be any conventional processor or the like. The steps of the image editing method with reference to embodiments of this application may be directly performed by a hardware processor, or may be performed by a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 701. The processor 702 reads information in the memory 701, and completes, in combination with the hardware of the processor 702, a function that needs to be performed by a unit included in the image editing apparatus in embodiments of this application, or performs the image editing method in embodiments of this application.

The communication interface 704 uses a transceiver apparatus, for example, but not limited to, a transceiver, to implement communication between the image editing device 700 and another device or a communication network. For example, a first text, a first image, and the like may be obtained through the communication interface 704.

The bus 703 may include a path for transferring information between components (for example, the memory 701, the processor 702, and the communication interface 704) of the image editing device 700.

In the several embodiments provided in this application, it should be understood that the disclosed apparatus and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image editing method, comprising:
obtaining a first image and a first text, wherein the first text represents an editing requirement of the first image;
decoupling the editing requirement into at least two first basic editing tasks based on the first text, wherein each first basic editing task is used to implement an image processing phase in a process of editing the first image to meet the editing requirement; and
generating a first edited image based on the first image, the first text, and the at least two first basic editing tasks.

2. The method according to claim 1, wherein generating the first edited image based on the first image, the first text, and the at least one first basic editing task comprises:
generating a first noise based on the first text;
generating at least one second noise based on the first image and the at least two first basic editing tasks;
inputting the first noise and the at least one second noise into a noise decision network for processing, to obtain a third noise; and
generating the first edited image based on the third noise.

3. The method according to claim 1 or 2, wherein the method further comprises:
determining a first score of the first edited image based on the first edited image, the first image, and the first text, wherein the first score represents editing quality of the first edited image.

4. The method according to claim 3, wherein the method further comprises:
decoupling the editing requirement into at least two second basic editing tasks based on the first text and the first score, wherein each second basic editing task is used to implement an image processing phase in the process of editing the first image to meet the editing requirement; and
generating a second edited image based on the first image, the first text, and the at least two second basic editing tasks, wherein editing quality of the second edited image is higher than the editing quality of the first edited image.

5. The method according to claim 4, wherein the first basic editing task or the second basic editing task comprises at least one of the following: generation, fusion, pickup, removal, portrait beautification, and portrait shaping.

6. An image editing apparatus, comprising:
an obtaining module, configured to obtain a first image and a first text, wherein the first text represents an editing requirement of the first image;
a decoupling module, configured to decouple the editing requirement into at least two first basic editing tasks based on the first text, wherein each first basic editing task is used to implement an image processing phase in a process of editing the first image to meet the editing requirement; and
a generation module, configured to generate a first edited image based on the first image, the first text, and the at least two first basic editing tasks.

7. The apparatus according to claim 6, wherein the generation module is specifically configured to:
generate a first noise based on the first text;
generate at least one second noise based on the first image and the at least two first basic editing tasks;
input the first noise and the at least one second noise into a noise decision network for processing, to obtain a third noise; and
generate the first edited image based on the third noise.

8. The apparatus according to claim 6 or 7, wherein the apparatus further comprises:
a determining module, configured to determine a first score of the first edited image based on the first edited image, the first image, and the first text, wherein the first score represents editing quality of the first edited image.

9. The apparatus according to claim 8, wherein
the decoupling module is further configured to decouple the editing requirement into at least two second basic editing tasks based on the first text and the first score, wherein each second basic editing task is used to implement an image processing phase in the process of editing the first image to meet the editing requirement; and
the generation module is further configured to generate a second edited image based on the first image, the first text, and the at least two second basic editing tasks, wherein editing quality of the second edited image is higher than the editing quality of the first edited image.

10. The apparatus according to claim 9, wherein the first basic editing task or the second basic editing task comprises at least one of the following: generation, fusion, pickup, removal, portrait beautification, and portrait shaping.

11. An image editing device, comprising a processor and a memory, wherein the processor is connected to the memory, the memory is configured to store program code, and the processor is configured to invoke the program code to perform the image editing method according to any one of claims 1 to 5.

12. A computer-readable storage medium, wherein the computer-readable storage medium stores a computer program, and the computer program is executed by a processor to implement the image editing method according to any one of claims 1 to 5.
